# EUROPÄISCHE PATENTSCHRIFT

(11) **EP 3 070 369 B1**
(45) Veröffentlichungstag und Bekanntmachung des Hinweises auf die Patenterteilung: **23.10.2019**
(21) Anmeldenummer: 16160675.1
(22) Anmeldetag: 16.03.2016
(51) Int. Cl.: F16G 11/14

(54) **SEILGLEITRING, INSBESONDERE CHOKERRING**
LINE SLIP RING, IN PARTICULAR CHOKER RING
BAGUE DE GLISSEMENT DE CABLE, EN PARTICULIER ANNEAU CHOKER

(30) Priorität: 20.03.2015 AT 1592015
(43) Veröffentlichungstag der Anmeldung: 21.09.2016
(73) Patentinhaber: Schilter Seilbahn- und Metallbau GmbH, 6472 Erstfeld (CH)
(72) Erfinder: Schilter, Lorenz, 6463 Bürglen (CH)
(74) Vertreter: Torggler & Hofinger Patentanwälte

(56) Entgegenhaltungen:
- CA-A- 1 107 788
- CA-A1- 2 147 945
- DE-U1- 8 429 871
- US-A- 841 726

## Beschreibung

Die vorliegende Erfindung betrifft einen Seilgleitring, mit den Merkmalen des Oberbegriffes des Anspruches 1.

Seilgleitringe, insbesondere Chokerringe, der eingangs genannten Art zählen bereits zum Stand der Technik und werden beispielsweise in der DE 101 34 219 B4, der CA 21 47 945 A1, der DE 84 29 871 U1, der CA 11 07 788 A und der US 84 17 26 A gezeigt.

Seilgleitringe, in weiterer Folge auch Chokerringe genannt, werden zum Abtransport von Holzstämmen mittels einer Holzseilbahn verwendet. Der Chokerring ist dabei mit einer Würgeschlinge ausgestattet, welche sich "würgend" um den Holzstamm schlingt. Unter Zug am Chokerring zieht sich die Schlinge zu und hält den Baumstamm. In weiterer Folge kann nun der Chokerring an einem Zugseil befestigt werden. Dieses Zugseil ist wiederum an einem Laufwagen der Holzseilbahn befestigt. Natürlich kann das Zugseil auch an einem anderen Transportmittel wie beispielsweise einem Fahrzeug oder einem Hubschrauber befestigt werden. Der Chokerring wird auf das Zugseil aufgefädelt, wobei ein Endstück am Zugseil verhindert, dass der Chokerring oder die Anordnung von mehreren Chokerringen vom Zugseil rutschen kann. Durch die Gewichtsbelastung der geladenen Baumstämme und der ständigen Bewegung des Chokerrings am Zugseil wird der Chokerring stark beansprucht. Besonders an einer Stelle reibt das Zugseil, welches nicht nur durch ein Seil ausgestaltet sein kann, sondern auch durch eine Kette, permanent am Chokerring. Durch die permanente Reibung wird das Material an der Stelle des Chokerrings abgerieben, was zu Verschleiß an der beanspruchten Stelle führt. Nach längerem Gebrauch eines Chokerrings erkennt man oft, dass die Wandung des Chokerrings an dieser Stelle immer dünner wird und bei weiterem Gebrauch gegebenenfalls durchbrechen kann. Das Durchbrechen des Chokerrings ist als erhebliches Sicherheitsrisiko anzusehen. Weiters wird das Zugseil durch die ständige Reibung am Chokerring ebenfalls stark beansprucht.

Verschleißerscheinungen an den Ketten, wie beispielsweise Abrieb oder gar Gliederbruch, sowie Verschleißerscheinungen an den Seilen, wie beispielsweise Litzenbruch oder Durchscheuerung, können beim Einsatz von Chokerringen auftreten, was als erhebliches Sicherheitsrisiko anzusehen ist.

Aufgabe der Erfindung ist es, die vorbeschriebenen Nachteile zu vermeiden und einen gegenüber dem Stand der Technik verbesserten Seilgleitring anzugeben.

Dies wird beim erfindungsgemäßen Seilgleitring durch die Merkmale des Anspruches 1 erreicht.

Je nach Ausführung oder Eigenschaft des definierten Seilgleitbereiches kann dies zur Schonung des Zugseiles und zu einer längeren Lebensdauer des Seilgleitringes beitragen.

Gemäß einem weiteren Aspekt der Erfindung ist vorgesehen, dass die Durchführung im Wesentlichen tropfenförmig ausgestaltet ist. Durch eine tropfenförmige Durchführung ist zusätzlich gewährleistet, dass das Zugseil in einen definierten Bereich der Durchführung rutscht, in welchem sich der Seilgleitbereich befindet.

Gemäß einem weiteren Ausführungsbeispiel ist es vorgesehen, dass der Seilgleitbereich lösbar, vorzugsweise durch eine Schraubverbindung, mit dem Seilgleitring verbunden ist. Dadurch kann der Seilgleitbereich im Falle einer Beschädigung oder im Falle von Verschleiß ausgetauscht werden. Weiters kann bei Änderung der Form des Seilgleitbereiches für eine andere Anwendung verwendet werden.

Wenn der Seilgleitbereich beweglich am Seilgleitring befestigt ist, so kann dieser - beispielsweise als Rundkörper ausgeführt - die Reibkräfte am Seilgleitring stark reduzieren. Sehr vorteilhaft ist es dabei, wenn der Seilgleitbereich als ein Rundkörper, vorzugsweise als Rolle oder Trommel, ausgebildet ist.

Wenn der Seilgleitring auch nach einer Entnahme des Seilgleitbereiches einen in sich geschlossenen Ring bildet, so bleibt der Seilgleitring auch bei einem Defekt des Seilgleitbereiches aufgrund seiner geschlossenen Struktur nach wie vor stabil genug, um die auftretenden Gewichtskräfte beim Transport von beispielsweise Baumstämmen aufnehmen zu können. Würde der Seilgleitbereich im Einsatzfall aus dem Seilgleitbereich entfallen, wäre somit weiterhin die Sicherheit des Seilgleitringes gewährleistet.

Wenn das Material des Seilgleitbereiches weicher oder härter ist als das Material des Seilgleitringes, kann - je nachdem was gewünscht wird - ein gewollter Verschleiß am Seilgleitbereich hervorgerufen werden, um den Seilgleitring selbst nicht zu zerstören, oder bei der Ausführung eines härteren Seilgleitbereiches die Lebensdauer und somit die Betriebssicherheit des Seilgleitbereiches erhöht werden. Je nachdem aus welchem Material das Zugseil besteht, kann so auch über verschiedene Materialhärten des Seilgleitbereiches der Seilgleitring an seine Anwendung angepasst werden.

Gemäß einem weiteren Aspekt der Erfindung ist vorgesehen, dass die Durchführung im Wesentlichen tropfenförmig ausgestaltet ist. So wird der Bereich in dem das Seil durch den Seilgleitring läuft in einem bestimmten Bereich geführt. Als besonders vorteilhaft hat sich dabei herausgestellt, dass der Seilgleitbereich sich im verjüngenden Bereich der tropfenförmigen Durchführung befindet. So kann der Seilgleitbereich an die Eigenschaften des Seiles angepasst werden.

Weitere vorteilhafte Ausführungsformen sind in den abhängigen Unteransprüchen definiert.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigt:
- Fig. 1: eine Anordnung aus Seilgleitring, Zugseil und Würgeschlinge,
- Fig. 2a und 2b: einen Seilgleitring in verschiedenen Ansichten,
- Fig. 3: eine Anordnung aus zwei Seilgleitringen mit Würgeschlingen an einem Zugseil,
- Fig. 4: eine schematische Darstellung einer Holzseilbahn unter Verwendung von Seilgleitringen und
- Fig. 5: eine Draufsicht auf einen Seilgleitring.

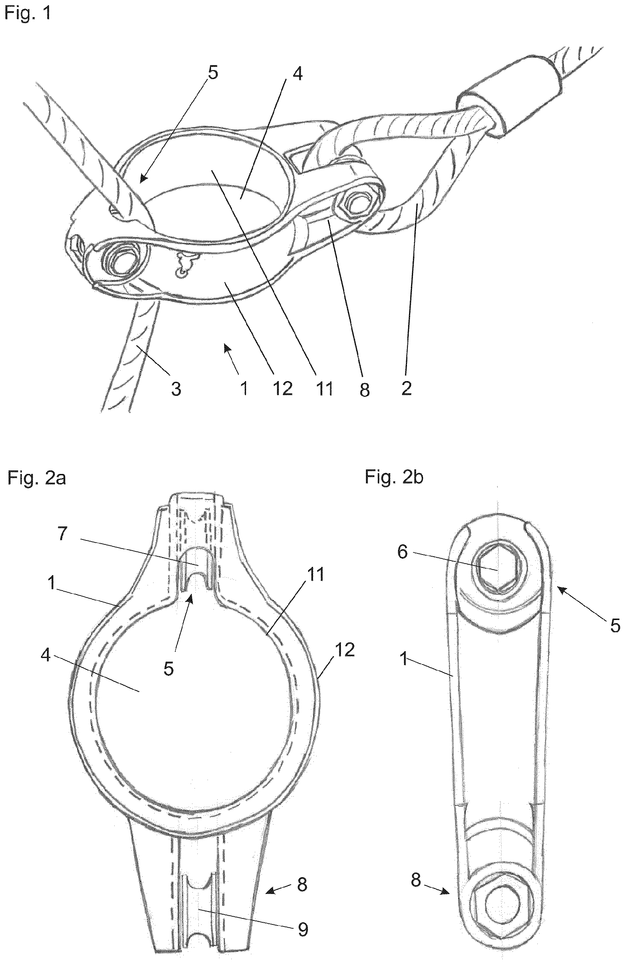

Die Figur 1 zeigt einen Seilgleitring 1, mit einer Durchführung 4, welche durch die spezielle Ausformung der Innenwand 11 erzeugt wird. In einem Bereich der Durchführung 4 verändert sich die Form der Innenwand 11 und bildet den Seilgleitbereich 5 aus. Der Seilgleitbereich 5 ist jener Bereich, in welchem das Zugseil 3 bei der Anwendung des Seilgleitringes 1 den Seilgleitring 1 berühren sollte. In derselben Ebene wie der Seilgleitbereich 5, nur auf der gegenüberliegenden Seite des Seilgleitringes 1, befindet sich der Aufnahmebereich 8 für die Würgeschlinge 2. Daraus folgt, dass unter Zugbelastung an der Würgeschlinge 2 das Zugseil 3 aufgrund der speziellen Ausformung der Durchführung 4 in den Seilgleitbereich 5 rutscht. Das Zugseil 3 bzw. die Würgeschlinge 2 müssen nicht zwingend Seile sein, diese können auch durch Ketten ausgebildet sein. Bei der Anwendung eines Seiles kann dies ein Stahlseil oder auch ein Kunstfaserseil sein.

Die Figur 2a zeigt den Seilgleitring 1 in der Draufsicht. Erkennbar ist der Aufnahmebereich 8, in welchem in weiterer Folge die Würgeschlinge 2 eingehängt wird - in Figur 2a nicht ersichtlich. In diesem Ausführungsbeispiel wird der Aufnahmebereich 8 durch eine Rolle 9 ergänzt. Die Durchführung 4 wird leicht tropfenförmig ausgebildet. Die Durchführung 4 kann jedoch auch einfach durch eine Kreisform, eine Ellipsenform oder eine Ovalform ausgebildet sein. Vorteilhaft ist es, wenn durch die Formgebung der Durchführung 4 das Seil in den Seilgleitbereich 5 rutschen kann. In diesem Ausführungsbeispiel ist der Seilgleitbereich 5 durch einen Rundkörper 7 ausgebildet. Dieser Rundkörper 7 kann eine Rolle, Trommel, ein Rad oder Ähnliches sein. Durch die Ausbildung als Rundkörper 7 wird die Relativbewegung des Seilgleitringes 1 zum Zugseil 3 auf ein Minimum reduziert, da sich der Rundköper 7 entlang dem Zugseil 3 abrollen kann. Aus diesem Grund wird der Verschleiß am Zugseil 3 bzw. am Seilgleitring 1 erheblich reduziert. Die Lebensdauer des Zugseiles 3 und des Seilgleitringes 1 werden somit erhöht, die Betriebssicherheit wird verbessert und die Umfallgefahr reduziert.
In der Fig. 2a ist zudem erkennbar, dass das Zugseil in einer Durchführung 4 des vollständig in sich geschlossenen Seilgleitringes 1 geführt wird. Somit würde der Seilgleitring auch bei Verlust oder Bruch des Rundkörpers 9 in der Lage sein, die auftretenden Belastungen aufnehmen zu können. Das Zugseil könnte dabei nicht aus dem vollständig in sich geschlossenen Seilgleitring 1 entweichen.

Die Figur 2b zeigt den Seilgleitring 1 der Figur 2a in der Seitenansicht. Der Rundkörper 7, der den Seilgleitbereich 5 darstellt, wird durch ein Verbindungselement 6 am Seilgleitring 1 befestigt. Das Verbindungselement 6 kann sowohl eine lösbare Verbindung, wie in diesem Beispiel eine Sechskantschraube mit einer Konterung , als auch eine starre, nicht lösbare Verbindung sein. Der Vorteil eines lösbaren Verbindungselementes 6 ist der, dass beispielsweise bei Beschädigung des Seilgleitbereichs 5 dienenden Rundkörpers 7 dieser ausgetauscht werden kann. Weiters könnte je nach Einsatzart des Seilgleitringes 1 der Rundkörper 7 gegen eines anders geformten oder weicheren / härteren Rundkörper 7 ausgetauscht werden. Somit wird der Seilgleitring 1 in seiner Anwendung noch vielseitiger als aus dem Stand der Technik bekannte Chokerringe. Auch die Rolle 9 am Aufnahmebereich 8 wird in diesem Ausführungsbeispiel durch eine lösbare Verbindung fixiert.

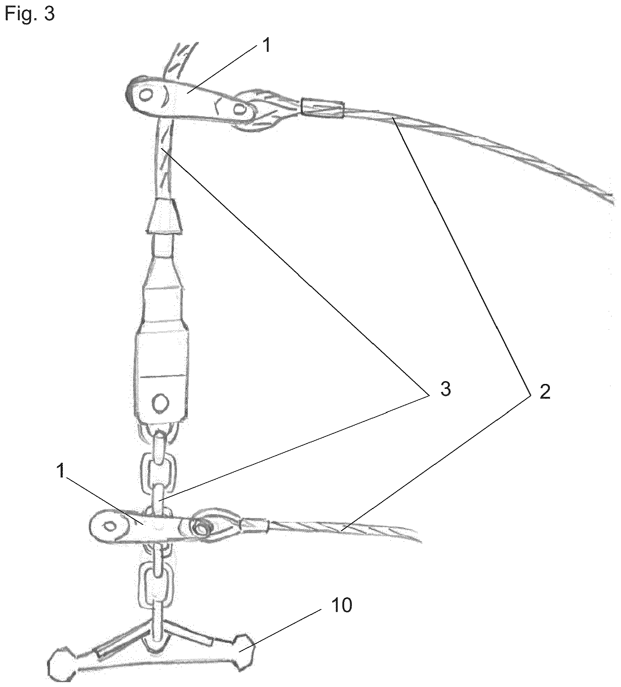

Die Figur 3 zeigt zwei Seilgleitringe 1 im Einsatz an einem Zugseil 3. Das Zugseil 3 wird mittels des beweglichen Endstücks 10 durch die Durchführungen der Seilgleitringe 1 geführt. Das lose gelagerte Endstück 10 wird unter Belastung quergestellt und kann nicht mehr durch die Durchführungen 4 der Seilgleitringe 1 herausrutschen. Würde nun an den Würgeschlingen 2 die Gewichtskraft einer angehängten Last wirken, würden die Seilgleitringe 1 entlang des Zugseiles 3 bis zum Endstück 10 rutschen. Durch den definierten Seilgleitbereich 5 - in Figur 1, Figur 2a und Figur 2b ersichtlich - wird dabei die Reibkraft ein Verschleiß am Zugseil 3 und auch an dem Seilgleitring 1 reduziert, was sich in der Lebensdauer der Komponenten widerspiegelt.

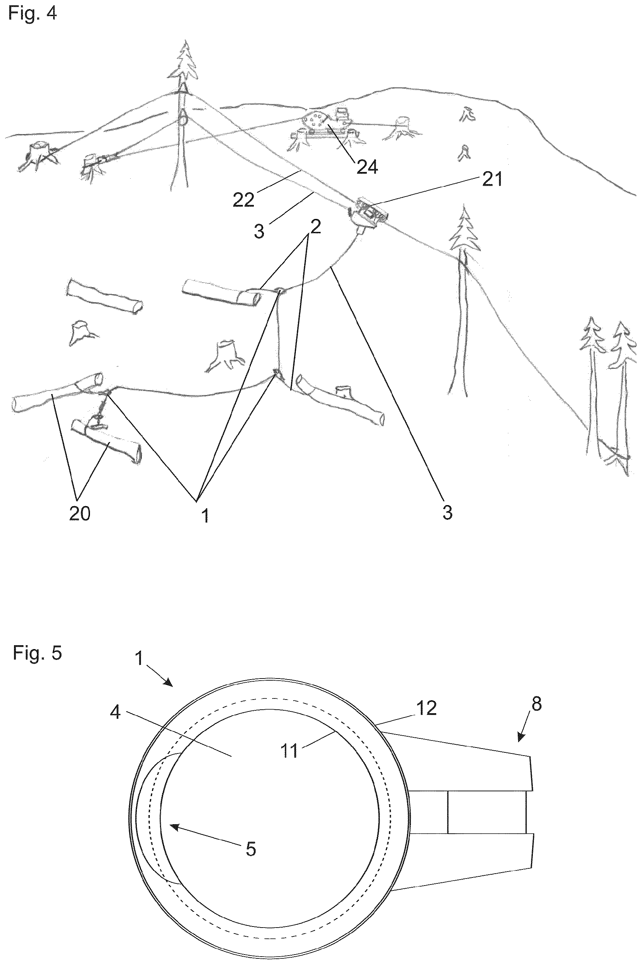

Die Figur 4 zeigt eine Holzseilbahn, mit welcher längliche Gegenstände 20, insbesondere Baumstämme, transportiert werden. Anhand der Würgeschlingen 2 werden die Baumstämme über die Seilgleitringe 1 mit dem Zugseil 3 verbunden. Wird an der Seilwinde 24 das Zugseil 3 durch den hängenden Laufwagen 21 aufgewickelt, wird das Zugseil 3 gestreckt. Die darauf befindlichen Seilgleitringe 1 rutschen bis ans Ende des Zugseiles 3 zum Endstück 10 aufgrund der Gewichtskraft der an den Würgeschlingen 2 hängenden länglichen Gegenstände 20. Die dabei entstehenden Reibkräfte am Zugseil 3 bzw. den Seilgleitringen 1 werden durch die in der Figur 4 nicht ersichtlichen Seilgleitbereiche 5 reduziert. Weiters kann der Seilgleitring 1 nicht nur zur Aufnahme der Würgeschlingen 2 angewendet werden. Der Seilgleitring 1 kann aufgrund seiner Ausführung mit beispielsweise einem Rundkörper 7 - wie in Figur 2a/2b ersichtlich - auch als Seilumlenkung verwendet werden. Der Seilgleitring 1 muss hierzu an seinem Aufnahmebereich 8 an einem feststehenden Gegenstand wie beispielsweise einem starken Baum, oder einem Baumstrunk befestigt werden. Durch den Rundkörper 7, der als Rolle funktioniert, wird die Seilreibung am Zugseil 3 stark reduziert. Dies ist besonders bei Kunststofffaserseilen sehr wichtig, da durch die ständige Reibung eine punktuelle Erhitzung am Seilgleitring 1 entstehen würde. Diese punktuelle Erhitzung kann bei einem Kunstfaserseil (beispielsweise Dyneema) zur Durchschmelzung des Seiles führen. Bei Stahlseilen kann die permanente Reibung zu Litzenbrüchen oder Durchscheuerungen führen. Dies kann durch den Seilgleitring 1 verhindert werden.

Die Figur 5 zeigt ein weiteres Ausführungsbeispiel eines Seilgleitringes 1. Der Seilgleitbereich 5 wird dabei nicht durch einen Rundkörper 7 ausgebildet, sondern ist unbeweglich mit der Innenwand 11 des Seilgleitringes 1 verbunden. Dieser Seilgleitbereich 5 kann durch Material entstehen, welches härter oder weicher als das Material der umgebenden Innenwand 11 ist. Je nach Härte bzw. Oberflächenbeschaffenheit des somit geschaffenen Seilgleitbereiches 5 wird der Verschleiß am Seilgleitring 1 bzw. Zugseil 3 oder anderen Seilen eingestellt. Der Seilgleitbereich 5 kann lösbar mit dem Seilgleitring 1 verbunden sein - beispielsweise über in der Figur 5 nicht ersichtliche Schraubverbindungen. Der Seilgleitbereich 5 kann jedoch auch mittels einer unlösbarer Verbindung wie beispielsweise durch Hartlöten oder Schweißen mit dem Seilgleitring 1 verbunden werden. Eine weitere Möglichkeit wäre es, den Seilgleitbereich 5 einfach durch eine Randschichthärtung zu schaffen, wobei sich im Bereich des Seilgleitbereiches 5 eine härtere Oberfläche ergeben würde als im restlichen Bereich der Innenwand 11.

## Patentansprüche

1. Seilgleitring (1), insbesondere Chokerring, zur Befestigung einer Würgeschlinge (2), insbesondere Chokerstruppe, welche zum Transport eines länglichen Gegenstandes (20), insbesondere Baumstammes, an einem Zugseil (3) um den länglichen Gegenstand (20) gelegt wird, wobei das Zugseil (3) in einer Durchführung (4) des Seilgleitringes (1) geführt wird, wobei die Durchführung (4) des Seilgleitringes (1) durch zumindest zwei Bestandteile ausgebildet wird, wobei einer der Bestandteile einen definierten Seilgleitbereich (5) ausbildet, **dadurch gekennzeichnet, dass** der Seilgleitring (1) auch nach einer Entnahme des Seilgleitbereiches (5) einen in sich geschlossenen Ring bildet.

2. Seilgleitring nach Anspruch 1, **dadurch gekennzeichnet, dass** der Seilgleitbereich (5) lösbar - vorzugsweise durch eine Schraubverbindung - mit dem Seilgleitring (1) verbunden ist.

3. Seilgleitring nach Anspruch 1, **dadurch gekennzeichnet, dass** der Seilgleitbereich (5) nicht lösbar mit dem Seilgleitring (1) verbunden ist.

4. Seilgleitring nach Anspruch 1 oder 2, **dadurch gekennzeichnet, dass** der Seilgleitbereich (5) beweglich am Seilgleitring (1) befestigt ist.

5. Seilgleitring nach einem der Ansprüche 1 bis 4, **dadurch gekennzeichnet, dass** der Seilgleitbereich (5) als ein Rundkörper (7), vorzugsweise als Rolle oder Trommel, ausgebildet ist.

6. Seilgleitring nach einem der Ansprüche 1 bis 5, **dadurch gekennzeichnet, dass** der Seilgleitring (1) an einer Außenwand (12) einen Aufnahmebereich (8) zur Aufnahme der Würgeschlinge (2), insbesondere Chokerstruppe, aufweist.

7. Seilgleitring nach einem der Ansprüche 1 bis 6, **dadurch gekennzeichnet, dass** das Material des Seilgleitbereiches (5) weicher oder härter als das Material des Seilgleitringes (1) ist.

8. Seilgleitring nach einem der Ansprüche 1 bis 6, **dadurch gekennzeichnet, dass** das Material des Seilgleitbereiches (5) dieselbe Härte wie das Material des Seilgleitringes (1) aufweist.

9. Seilgleitring nach einem der Ansprüche 6 bis 8, **dadurch gekennzeichnet, dass** der Aufnahmebereich (8) zur Aufnahme der Würgeschlinge (2) mit einer Rolle (9) versehen ist.

10. Seilgleitring, insbesondere nach einem der Ansprüche 1 bis 9, **dadurch gekennzeichnet, dass** die Durchführung (4) im Wesentlichen tropfenförmig ausgestaltet ist.

11. Seilgleitring nach Anspruch 10, **dadurch gekennzeichnet, dass** der Seilgleitbereich (5) sich in einem verjüngenden Bereich der Durchführung (4) befindet.

12. Seilgleitring nach einem der Ansprüche 1 bis 11, **dadurch gekennzeichnet, dass** der Seilgleitring (1) aus einem metallischen Werkstoff besteht.

## Claims

1. A cable slip ring (1), in particular a choker ring, for fastening a choke sling (2), in particular a choker strap, which for transporting an elongate object (20), in particular a tree trunk, on a traction cable (3) is laid around the elongate object (20), wherein the traction cable (3) is guided in a guide opening (4) of the cable slip ring (1), wherein the guide opening (4) of the cable slip ring (1) is provided by at least two components, wherein one of the components forms a defined cable slip region (5), **characterised in that** the cable slip ring (1) forms a ring which is closed in itself even after removal of the cable slip region (5).

2. A cable slip ring according to claim 1 **characterised in that** the cable slip region (5) is releasably connected to the cable slip ring (1) - preferably by a screw connection.

3. A cable slip ring according to claim 1 **characterised in that** the cable slip region (5) is non-releasably connected to the cable slip ring (1).

4. A cable slip ring according to claim 1 or claim 2 **characterised in that** the cable slip region (5) is moveably fixed to the cable slip ring (1).

5. A cable slip ring according to one of claims 1 to 4 **characterised in that** the cable slip region (5) is in the form of a round body (7), preferably a roller or drum.

6. A cable slip ring according to one of claims 1 to 5 **characterised in that** at an outer wall (12) the cable slip ring (1) has a receiving region (8) for receiving the choke sling (2), in particular choker strap.

7. A cable slip ring according to one of claims 1 to 6 **characterised in that** the material of the cable slip region (5) is softer or harder than the material of the cable slip ring (1).

8. A cable slip ring according to one of claims 1 to 6 **characterised in that** the material of the cable slip region (5) is of the same hardness as the material of the cable slip ring (1).

9. A cable slip ring according to one of claims 6 to 8 **characterised in that** the receiving region (8) for receiving the choke sling (2) is provided with a roller (9).

10. A cable slip ring, in particular according to one of claims 1 to 9, **characterised in that** the guide opening (4) is of a substantially drop-shaped configuration.

11. A cable slip ring according to claim 10 **characterised in that** the cable slip region (5) is disposed in a narrowing region of the guide opening (4).

12. A cable slip ring according to one of claims 1 to 11 **characterised in that** the cable slip ring (1) consists of a metallic material.

## Revendications

1. Bague de glissement de câble (1), en particulier anneau choker, pour la fixation d'une boucle d'étranglement (2), en particulier sangle choker, laquelle est posée pour le transport d'un objet allongé (20), en particulier d'un tronc d'arbre, au niveau d'un câble de traction (3) autour de l'objet allongé (20), dans laquelle le câble de traction (3) est guidé dans un passage (4) de la bague de glissement de câble (1), dans laquelle le passage (4) de la bague de glissement de câble (1) est réalisé par au moins deux composants, dans laquelle un des composants réalise une zone de glissement de câble définie (5), **caractérisée en ce que** la bague de glissement de câble (1) forme une bague fermée en soi aussi après un retrait de la zone de glissement de câble (5).

2. Bague de glissement de câble selon la revendication 1, **caractérisée en ce que** la zone de glissement de câble (5) est reliée de manière amovible - de préférence par une liaison vissée - à la bague de glissement de câble (1).

3. Bague de glissement de câble selon la revendication 1, **caractérisée en ce que** la zone de glissement de câble (5) est reliée de manière non amovible à la bague de glissement de câble (1).

4. Bague de glissement de câble selon la revendication 1 ou 2, **caractérisée en ce que** la zone de glissement de câble (5) est fixée mobile au niveau de la bague de glissement de câble (1).

5. Bague de glissement de câble selon l'une quelconque des revendications 1 à 4, **caractérisée en ce que** la zone de glissement de câble (5) est réalisée en tant que corps rond (7), de préférence en tant que rouleau ou tambour.

6. Bague de glissement de câble selon l'une quelconque des revendications 1 à 5, **caractérisée en ce que** la bague de glissement de câble (1) présente au niveau d'une paroi extérieure (12) une zone de réception (8) pour la réception de la boucle d'étranglement (2), en particulier de la sangle choker.

7. Bague de glissement de câble selon l'une quelconque des revendications 1 à 6, **caractérisée en ce que** le matériau de la zone de glissement de câble (5) est plus tendre ou plus dur que le matériau de la bague de glissement de câble (1).

8. Bague de glissement de câble selon l'une quelconque des revendications 1 à 6, **caractérisée en ce que** le matériau de la zone de glissement de câble (5) présente la même dureté que le matériau de la bague de glissement de câble (1).

9. Bague de glissement de câble selon l'une quelconque des revendications 6 à 8, **caractérisée en ce que** la zone de réception (8) est dotée d'un rouleau (9) pour la réception de la boucle d'étranglement (2).

10. Bague de glissement de câble, en particulier selon l'une quelconque des revendications 1 à 9, **caractérisée en ce que** le passage (4) est réalisé sensiblement en forme de goutte.

11. Bague de glissement de câble selon la revendication 10, **caractérisée en ce que** la zone de glissement de câble (5) se trouve dans une zone conique du passage (4).

12. Bague de glissement de câble selon l'une quelconque des revendications 1 à 11, **caractérisée en ce que** la bague de glissement de câble (1) se compose d'un matériau métallique.
